# EUROPÄISCHE PATENTSCHRIFT

(11) **EP 1 975 493 B1**
(45) Veröffentlichungstag und Bekanntmachung des Hinweises auf die Patenterteilung: **26.10.2011**
(21) Anmeldenummer: 07024042.9
(22) Anmeldetag: 12.12.2007
(51) Int. Cl.: H02G 15/18, B29C 65/76, B29C 61/06

(54) **Stützwendel**
Helical support
Hélice d'appui

(30) Priorität: 28.03.2007 DE 202007004671 U
(43) Veröffentlichungstag der Anmeldung: 01.10.2008
(73) Patentinhaber: REHAU AG + Co, 95111 Rehau (DE)
(72) Erfinder: Ernstberger, Theodor, 95111 Rehau (DE); Rückert, Andreas, 95111 Rehau (DE)

(56) Entgegenhaltungen:
- EP-A- 1 835 591
- DE-A1- 10 355 073
- DE-A1- 19 954 440
- JP-A- 7 258 494
- US-A- 6 162 865

## Beschreibung

Die Erfindung betrifft eine Stützwendel, bestehend aus einem spiralförmig gewickelten Profilband, das entlang einer von benachbarten Profilbandabschnitten gebildeten spiralförmigen Kontaktfläche unter Bildung einer Schweißnaht verschweißt ist und aus einem thermoplastisch verarbeitbaren Werkstoff besteht, wobei dem thermoplastisch verarbeitbaren Werkstoff Füll- und/oder Verstärkungsstoffe zugegeben sind.

Um längliche, vorzugsweise zylindrische Elemente zu ummanteln, wie elektrische Kabelverbindungen, Verbindungen von Telekommunikationskabeln und dergleichen, sind elastische Muffen bekannt, die als selbst zusammenziehend oder kalt zusammenziehend bezeichnet werden. Diese Muffen weisen eine elastische röhrenförmige Struktur auf. Vor der eigentlichen Anwendung wird die Muffe in einem gedehnten Zustand gehalten. Um dies zu bewerkstelligen wird eine röhrenförmige Stützwendel verwendet, auf die die Muffe in ihrem elastisch expandierten Zustand aufgebracht ist. Die Stützwendel wird nach Abschluss der Montage und Kontrolltätigkeiten an der Verbindungsstelle entfernt, wodurch die elastische Kontraktion der Muffe realisiert wird, um die Verbindungsstelle allumfassend zu bedecken und zu verschließen.

Die Stützwendel besteht in der Regel aus einem Band, das spiralförmig in nebeneinander liegenden Wicklungen gewunden ist, die miteinander verbunden sind. Das Entfernen der Stützwendel wird durch den progressiven Abbau der Stützwendel realisiert, indem das Band durch die Innenseite der röhrenförmigen zylindrischen Stützwendel zurückgezogen wird, so dass die Wicklungen progressiv entwunden werden. Hierbei erfolgt eine Kontraktion der elastischen Muffe, so dass diese sich an das abzudeckende Bauteil, z. B. an ein Kabelende, anlegt.

Aus der EP 0 500 216 ist eine Stützwendel bekannt, die aus einem entfernbaren Kern für eine schrumpfbare röhrenförmige Umkleidung besteht, wobei der Kern eine röhrenförmige Wand mit einer geschwächten Linie in einer Helixform aufweist. Die röhrenförmige Wand ist aus einer Vielzahl von helixförmig gewickelten, überlappenden, laminierten Schichten aus einem kontinuierlichen Netz geformt. Eine Laminierverbindung zwischen den einzelnen Schichten des Netzes wird mit Hilfe einer Druckwalze gebildet, während die helixförmige geschwächte Linie mit einer Messerklinge oder alternativ über eine, eine Perforation einbringende, Vorrichtung in Längsrichtung in dem Netz als Sollbruchstelle beaufschlagt ist. Die Herstellung derartiger Stützwendeln als Formteile wird im Stand der Technik durch das Extrusionsblasverfahren umgesetzt, wobei in einem weiteren Arbeitsgang mit Hilfe einer zusätzlichen Vorrichtung eine radial verlaufende Kerbung bzw. Perforation eingebracht werden muss. Ein derartiger Arbeitsgang gestaltet sich recht aufwändig und kostenintensiv. Bei dem progressiven Abbau der Wicklungen entstehen dadurch Probleme, dass das Band wegen zu hoher Bindungskräfte bzw. schlechten Sollbruchstellen zwischen den nebeneinander liegenden Wicklungen abreißt. Dies führt dazu, dass die Verbindung über eine neue Stützwendel mit einer neuen Muffe realisiert werden muss.

Aus der WO 99/08355 A1 ist eine Vorrichtung bekannt, um eine elastische Muffe in einem expandierten Zustand zu halten, um beispielsweise längliche, vorzugsweise zylindrische Elemente, wie elektrische Kabelverbindungen und dergleichen zu bedecken. Die Vorrichtung umfasst ein Profil, das spiralförmig in nebeneinander liegenden Wicklungen angeordnet ist, wobei es eine zylindrische rohrförmige Form einnimmt, wobei die nebeneinander liegenden Wicklungen in wenigstens einem Bereich stoffschlüssig miteinander verbunden sind.

Aus der DE 38 23 817 C1 ist ein Verfahren zum Verbinden von Formkörpern, Profilen und dergleichen aus vernetzten, teilvernetzten bzw. ultrahochmolekularen polymeren Materialien bekannt. Dabei werden die Fügeflächen der Formkörper/Profile durch Wärmezuführung von außen bis zum Schmelzpunkt der kristallinen Polymerbestandteile erhitzt. Unmittelbar danach wird auf die aufgeschmolzenen Fügeflächen eine mit den Basispolymeren verträgliche Polymerbeschichtung aufgebracht. Danach werden die beschichteten Fügeflächen der Formkörper/Profile durch Wärmezuführung von außen aufgeschmolzen und unter Anwendung von Pressdruck miteinander verschweißt.

Weiterhin sind aus der EP 0 735 639 A1 Stützteile bekannt, die aus einem metallischen Werkstoff bestehen und mit einer Kunststoffumhüllung versehen sind. Bei diesen Stützteilen wird nachteilig gesehen, dass neben dem erhöhten Kostenaufwand in der Herstellung des Bandes und auch des Stützteiles sehr hohe Kräfte erforderlich sind, um das Stützteil aus der im expandierten Zustand gehaltenen elastischen Muffe progressiv zu entfernen. Des Weiteren ist aus der DE 39 43 296 C2 eine radial schrumpfbare, zylindrische Muffenanordnung zum Einhüllen einer Verbindung oder das Ende eines Elektrokabels bekannt, wobei diese Muffe aus weichem bzw. dauerelastischem Werkstoff bestehende Schichten aufweist und von einem entfernbaren mechanischen Stützmittel, vorzugsweise Stützwendel, im radial ausgedehnten Zustand gehalten ist. Die Schichten der Muffe sind durch aufeinanderfolgendes Spritzgießen miteinander verbunden und nach dem Entfernen der inneren Stützvorrichtung radial auf die Verbindung oder das Ende des Elektrokabels aufschrumpfbar.

Ein Nachteil bekannter Stützwendel wird darin gesehen, dass die Kräfte zum progressiven Abbau des Profils sehr unterschiedlich sind, wobei es auch vorkommen kann, dass die nebeneinander liegenden Wicklungen abreißen. Dies führt dazu, dass das Profil nicht vollständig aus der Muffe entfernt werden kann. Damit ist die Funktion der Vorrichtung nicht mehr gegeben. In diesem Zusammenhang wurde auch erkannt, dass bei einer zu geringen Bindung zwischen den einzelnen nebeneinander angeordneten Wicklungen die elastische Muffe durch ihr Bestreben, in ihren Ausgangszustand zurückzukehren, die Verbindungen löst und somit die Stützwirkung der Stützwendel nicht mehr gegeben ist. Auch in diesem Fall ist die Funktion der Stützwendel nicht gewährleistet.

Eine Stützwendel mit den eingangs beschriebenen Merkmalen ist aus der DE 103 55 073 A1 bekannt. Bei der bekannten Vorrichtung sind als Verstärkungsstoffe Fasern vorgesehen. Die DE 199 54 440 A1 zeigt ein Verfahren zur Herstellung von Hohlkörpern, bei dem der Hohlkörper aus einem bandförmigen Material mittels Laserverschweißung hergestellt wird. Die nachveröffentlichte Druckschrift EP 1 835 591 A1 offenbart eine Stützwendel, die als Verstärkungsstoffe Glasfasern, Glimmer oder Kreide enthalten kann.

Die Erfindung hat es sich zur Aufgabe gestellt, die Nachteile des bekannten Standes der Technik zu überwinden und eine Stützwendel aufzuzeigen, die eine elastische Muffe im expandierten Zustand sicher hält. Die Stützwendel soll kostengünstig und wirtschaftlich herstellbar sowie leicht und ohne hohen Kraftaufwand aus der im expandierten Zustand gehaltenen elastischen Muffe entfernbar sein.

Ausgehend von einer Stützwendel mit den eingangs beschriebenen Merkmalen wird die Aufgabe durch die Merkmale des Anspruchs 1, insbesondere durch die kennzeichnenden Merkmale des Anspruches 1, realisiert. Weitere Ausgestaltungsformen der erfindungsgemäßen Stützwendel sind in den Unteransprüchen beschrieben.

Beim Entfernen der Stützwendel aus der Muffe wird die Schweißverbindung aufgebrochen. Dabei dürfen keine Rückstände, wie z. B. beim Aufreißen entstehende Partikel der Stützwendel, innerhalb der Muffe zurückbleiben. Es hat sich gezeigt, dass sich bei einer Korngröße der Füll- und/oder Verstärkungsstoffe von kleiner als 50 µm, insbesondere kleiner als 20 µm, ein Ausfransen der Risskante sicher verhindern lässt.

Vorzugsweise sind dem thermoplastisch verarbeitbaren Werkstoff des spiralförmig gewickelten Profilbandes 2 Gewichtsprozent bis zu 70 Gewichtsprozent Füll- und /oder Verstärkungsstoffe zugegeben, durch die die Stärke der stoffschlüssigen Verbindung der Schweißnaht gezielt einstellbar ist. Es hat sich weiterhin gezeigt, dass ein Füll- und/oder Verstärkungsstoffgewichtsanteil von 5 bis 15 % in dem thermoplastisch verarbeitbaren Werkstoff die Bindungskräfte der Schweißnaht vorteilhaft beeinflusst.

Gemäß einer bevorzugten Ausführungsform der Erfindung hat es sich als vorteilhaft erwiesen, wenn der thermoplastisch verarbeitbare Werkstoff aus der Gruppe Polyethylen, Polypropylen, ABS, Polyamid, Polycarbonat und Mischungen dieser Werkstoffe ausgewählt ist. Es sind jedoch auch andere polymere Werkstoffe oder Werkstoffgemische denkbar.

Durch die Zugabe der Füll- und/oder Verstärkungsstoffe in das thermoplastisch verarbeitbare Material steigt die Sprödigkeit des Profilbandes, so dass es beim spiralförmigen Aufwickeln unter Umständen brechen kann. Es hat sich gezeigt, dass durch eine elastomere Modifizierung des Werkstoffes das Weißbruchverhalten des Profilbandes vorteilhaft reduziert werden kann. In diesem Zusammenhang hat sich eine Kombination aus z. B. Polypropylen mit Elastomer Modifiziertem Polypropylen (EMPP) als günstig erwiesen.

Nach Anspruch 4 werden vorteilhaft Talkum, Mikrotalkum, Holzmehl, Kreide, Gesteinsmehle, wie z. B. Kalziumcarbonat, oder Glaskugeln sowie Mischungen der vorgenannten Materialien als Füll- und/oder Verstärkungsstoffe eingesetzt. Es sind aber auch andere Stoffe denkbar. Bei der Verwendung von Talkum hat sich zudem gezeigt, dass der Einsatz von Mikrotalkum mit Korngrößen kleiner als 20 µm, vorzugsweise kleiner als 5 µm besonders geeignet sind.

## Patentansprüche

1. Stützwendel, bestehend aus einem spiralförmig gewickelten Profilband, das entlang einer von benachbarten Profilbandabschnitten gebildeten spiralförmigen Kontaktfläche unter Bildung einer Schweißnaht verschweißt ist und aus einem thermoplastisch verarbeitbaren Werkstoff besteht, wobei dem thermoplastisch verarbeitbaren Werkstoff Füllund/oder Verstärkungsstoffe zugegeben sind, **dadurch gekennzeichnet, dass** die Korngröße der Füll- und/oder Verstärkungsstoffe kleiner als 50 µm ist.

2. Sützwendel nach Anspruch 1, **dadurch gekennzeichnet, dass** die Korngröße der Füllund/oder Verstärkungsstoffe kleiner als 20 µm ist.

3. Stützwendel nach Anspruch 1, **dadurch gekennzeichnet, dass** dem thermoplastisch verarbeitbaren Werkstoff 5 bis 15 Gewichtsprozent Füll- und/oder Verstärkungsstoffe zugegeben sind.

4. Stützwendel nach mindestens einem der vorhergehenden Ansprüche, **dadurch gekennzeichnet, dass** die Füll- und/oder Verstärkungsstoffe aus der Gruppe Talkum, Mikrotalkum, Holzmehl, Kreide, Gesteinsmehlen oder Glaskugeln ausgewählt sind.

5. Stützwendel nach mindestens einem der vorhergehenden Ansprüche, **dadurch gekennzeichnet, dass** der thermoplastisch verarbeitbare Werkstoff elastomer modifiziert ist.

## Claims

1. Helical support, comprising a spirally wound profiled band which is welded along a spiral contact area formed by adjacent profiled band portions, thereby forming a weld seam, and consists of a thermoplastic processable material, wherein fillers and/or reinforcing substances are added to the thermoplastically processable material, **characterized in that** the particle size of the filler and/or reinforcing substances is less than 50 µm.

2. Helical support according to Claim 1, **characterized in that** the particle size of the fillers and/or reinforcing substances is less than 20 µm.

3. Helical support according to Claim 1, **characterized in that** from 5 to 15 per cent by weight of fillers and/or reinforcing substances is added to the thermoplastically processable material.

4. Helical support according to at least one of the preceding claims, **characterized in that** the fillers and/or reinforcing substances are selected from the group consisting of talc, microtalc, wood flour, chalk, ground minerals and glass beads.

5. Helical support according to at least one of the preceding claims, **characterized in that** the thermoplastically processable material is elastomerically modified.

## Revendications

1. Hélice d'appui, constituée d'une bande profilée enroulée en spirale, qui est soudée le long d'une surface de contact en forme de spirale formée par des portions de bande profilée adjacentes en formant un joint de soudure, et qui se compose d'un matériau pouvant être traité de manière thermoplastique, des charges et/ou des agents renforçants étant ajoutés au matériau pouvant être traité de manière thermoplastique, **caractérisée en ce que** la granulométrie des charges et/ou des agents renforçants est inférieure à 50 µm.

2. Hélice d'appui selon la revendication 1, **caractérisée en ce que** la granulométrie des charges et/ou des agents renforçants est inférieure à 20 µm.

3. Hélice d'appui selon la revendication 1, **caractérisée en ce que** l'on ajoute au matériau pouvant être traité de manière thermoplastique de 5 à 15 pour cent en poids de charges et/ou d'agents renforçants.

4. Hélice d'appui selon au moins l'une quelconque des revendications précédentes, **caractérisée en ce que** les charges et/ou les agents renforçants sont choisis parmi le groupe contenant le talc, le micro-talc, la farine de bois, la craie, des poudres minérales, ou des billes de verre.

5. Hélice d'appui selon au moins l'une quelconque des revendications précédentes, **caractérisée en ce que** le matériau pouvant être traité de manière thermoplastique est modifié de manière élastomère.
